# EUROPEAN PATENT APPLICATION

(11) **EP 4 844 728 A1**
(43) Date of publication of application: **25.11.2026**
(21) Application number: 25177203.4
(22) Date of filing: 19.05.2025
(51) Int. Cl.: G08G 1/14, B62D 15/02, G08G 1/01

(54) **METHODS AND SYSTEMS FOR PROVIDING PARKING ASSISTANCE FOR A VEHICLE**

(71) Applicant: VOLVO CAR CORPORATION, 405 31 Göteborg (SE)
(72) Inventor: INDERST, Sebastian, 416 54 Göteborg (SE); WENG, Chenyang, 417 47 Göteborg (SE); BENCHEIKEH LEHOCINE, Chouaib, 416 55 Göteborg (SE); HÖRNSTEIN, Herman, 461 31 Trollhättan (SE); RENSTRÖM, Kristin, 414 47 Göteborg (SE); JAKOBSSON, Roland, 422 43 Hisings Backa (SE); HUANG, Binru, 423 41 Torslanda (SE)
(74) Representative: Zacco Sweden AB

(57) **Abstract**

Computer-implemented methods and related aspects for providing parking assistance for a vehicle. The computer-implemented method comprises searching for available parking spots in a parking area having a plurality of parking spots based on sensor data collected from one or more vehicle-mounted sensors. The method further comprises predicting when one or more occupied parking spots within the parking area will become available based on sensor data collected from one or more vehicle-mounted sensors. Moreover, in response to predicting that a parking spot out of the one or more occupied parking spots will become available within a set time period, the method comprises outputting a signal indicative of a location of the occupied parking spot that is predicted to become available within the set time period, and an estimated time until the occupied parking spot that is predicted to become available within the set time period will become available.

## Description

### TECHNICAL FIELD

The disclosed technology relates to methods and systems for providing parking assistance for a vehicle. In particular, but not exclusively the disclosed technology relates to an automated parking solution that enhances traditional free-parking-space-searching solutions with predictive capabilities.

### BACKGROUND

Locating an unoccupied parking space within a parking facility, such as a multi-story garage, surface lot, or designated urban zone, is a fundamental precursor to the act of parking. However, this search process itself often introduces significant inefficiencies. For human drivers, the conventional method involves manually navigating through aisles, visually scanning for vacancies. This approach is inherently inefficient, particularly in large, complex, or crowded facilities, frequently resulting in wasted time, excess fuel consumption or battery depletion, increased traffic circulation and congestion within the parking area, and considerable driver frustration. The search path is often suboptimal, relying on chance rather than information.

Attempts have been made to alleviate this search burden using technology. Some facilities employ simple electronic counters displaying the number of ostensibly available spots per level or section. While providing coarse guidance, these systems suffer from inefficiencies related to accuracy (often failing to reflect real-time occupancy precisely) and granularity; they do not direct a driver or an automated system to a specific empty space, leaving a significant portion of the inefficient search process unresolved.

More sophisticated systems utilize indicators, such as red/green lights mounted above individual parking bays, signalling occupancy status. Although offering more specific guidance, the installation and maintenance of the required sensors and communication networks for each bay represent a substantial cost and logistical burden, rendering this solution economically inefficient for many operators, especially for retrofitting existing structures or managing large open lots. Furthermore, the reliability of individual sensors can be compromised, leading to inaccurate indications (e.g., showing a spot as free when it is occupied, or vice-versa), thereby perpetuating search inefficiency or leading users to unavailable spots.

A more advanced approach relies on infrastructure-based sensing and mapping. This involves deploying sensors across the parking facility, typically at or near each parking bay, to detect vehicle presence. A central system compiles this data into an occupancy map communicated to the automated vehicle. One inefficiency with such systems lies in the high cost and complexity of deploying and maintaining such dense sensor networks, making it economically unviable for widespread adoption or even impossible for large open lots. Furthermore, reliance on a central system introduces potential single points of failure, and inaccuracies stemming from sensor malfunctions, communication delays, or calibration issues can lead to inefficient routing, sending vehicles towards already occupied spots or failing to recognize available ones.

Another approach is the collaborative approach, involving vehicle-to-vehicle (V2V) or vehicle-to-infrastructure (V2I) data sharing about occupancy. However, these collaborative solutions face inefficiencies related to communication latency, network availability (especially challenging in underground or large structures), data standardization, market penetration requirements for V2V effectiveness, and the potential for outdated or conflicting information leading to inefficient decision-making.

Therefore, there exists a need for improved systems and methods for automated vehicle parking and retrieval that overcome the limitations of current approaches, offering enhanced reliability, efficiency, adaptability to diverse environments, safety, and user convenience.

### SUMMARY

The herein disclosed technology seeks to mitigate, alleviate or eliminate one or more of the above-identified deficiencies and disadvantages in the prior art to address various problems relating to parking assistance systems.

Various aspects and embodiments of the disclosed technology are defined below and in the accompanying independent and dependent claims.

A first aspect of the disclosed technology comprises a computer-implemented method for providing parking assistance for a vehicle. The computer-implemented method comprises searching for available parking spots in a parking area having a plurality of parking spots based on sensor data collected from one or more vehicle-mounted sensors. The method further comprises predicting when one or more occupied parking spots within the parking area will become available based on sensor data collected from one or more vehicle-mounted sensors. Moreover, in response to predicting that a parking spot out of the one or more occupied parking spots will become available within a set time period, the method comprises outputting a signal indicative of a location of the occupied parking spot that is predicted to become available within the set time period, and an estimated time until the occupied parking spot that is predicted to become available within the set time period will become available.

A second aspect of the disclosed technology comprises a computer program product comprising instructions which, when the program is executed by a computer, causes the computer to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computer, causes the computer to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for providing parking assistance for a vehicle. The system comprises one or more processors and one or more memory storage areas comprising program code, the one or more memory storage areas and the program code being configured to, with the one or more processors, cause the system to at least search for available parking spots in a parking area having a plurality of parking spots based on sensor data collected from one or more vehicle-mounted sensors. The one or more memory storage areas and the program code are configured to, with the one or more processors, cause the system to predict when one or more occupied parking spots within the parking area will become available based on sensor data collected by one or more vehicle-mounted sensors. Further, in response to predicting that a parking spot out of the one or more occupied parking spots will become available within a set time period, the system is caused output a signal indicative of a location of the occupied parking spot that is predicted to become available within the set time period, and an estimated time until the occupied parking spot that is predicted to become available within the set time period will become available. With this aspect of the disclosed technology, similar advantages and preferred features are present as in the other aspects.

A fifth aspect of the disclosed technology comprises a vehicle comprising a system according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that an improved parking assistance system can be provided which enhances the user experience by reducing the amount of time drivers have to spend searching for free spots in busy parking lots.

An advantage of some embodiments is that the chances for securing a parking spot in busy parking lots can be increased.

An advantage of some embodiments is that the amount of time spent circulating parking lots in search of free parking spots may be reduced, which can reduce fuel or power consumption for vehicles.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for providing parking assistance for a vehicle in accordance with some embodiments.
Fig. 2 is a schematic top-view illustration of a parking area and a vehicle having a system for providing parking assistance in accordance with some embodiments.
Fig. 3 is a schematic illustration of a vehicle having a system for providing parking assistance in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

As used herein, the term "in response to" may be construed to mean "when or "upon" or "if" depending on the context. Similarly, the phrase "in response to determining" or "if it is determined' or "when it is determined" or "in an instance of" may be construed to mean "upon determining" or "upon detecting and identifying occurrence of an event" or "in response to detecting occurrence of an event" depending on the context. Accordingly, the phrase "in response to X being equal to Y" may be construed as "when X equals Y", "if X equals Y", "when it is determined that X equals Y", or "in response to detecting/determining that X equals Y" depending on the context.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

### Overview

As mentioned in the foregoing, finding a free parking spot in busy urban areas can be a time-consuming and frustrating task. In such scenarios, drivers often have to circle around multiple times in parking lots in search of available space, and this issue is exacerbated in situations where the number of vehicles in an area exceeds the number of parking spots in that area. While some parking assistance systems of today have the capability of helping the driver to find available parking spots in a parking area, they are often limited to the extent that they only search for non-occupied (or "free") parking spots and treat occupied parking spots as simply unavailable, missing the opportunity to predict when a spot might soon become free.

To this end, embodiments herein propose a parking assistance solution that enhances the traditional automated search for free parking spots by incorporating predictive capabilities. Moreover, this is done using the vehicle's own sensory system without relying upon third-party data sources (e.g., sensors in the parking facility or parking payment system data), thereby providing a more general and widely applicable parking assistance solution and a reduction of the risk of making erroneous predictions due to outdated or stale data.

Accordingly, in accordance with some embodiments the parking assistance system starts by searching for free parking spots in a parking area using the vehicle's sensors and perception capabilities. During this time the system may collect and store the sensor data generated by the vehicle's sensors while traversing through the parking area. This may either be performed in an assistance mode to help a driver of the vehicle to find free parking spots or in a fully autonomous mode where the vehicle searches, finds, and automatically parks the vehicle without driver intervention.

However, if the system does not find any free parking spots in the parking area (or the portion of the parking area through which the vehicle has driven) a predictive function may be triggered that causes the system to search for indicators in the collected sensor data that indicate whether an occupied parking spot may become available soon. Such indicators include but are not limited to pedestrians approaching a car, pedestrians loading goods in a car, lights of a parked vehicle turning on, an engine of a parked vehicle turning on, or a heat signature of a parked vehicle indicating that the vehicle has been parked for a while. The predictive function may be triggered after a certain amount of time has passed since entering the parking area, so the vehicle does not necessarily need to drive around and scan an entire parking area in order to trigger the predictive function.

Then, based on the outcome of the predictive analysis performed by the predictive functionality, the system may either notify a driver of the vehicle or an Automated Driving System (ADS) of the vehicle of any potential soon-to-be-available parking spots. Thereby a better vehicle parking assistance functionality may be provided that enhances the user experience by allowing the drivers to make informed decisions about whether to wait for a parking spot to become available or to continue searching, reducing frustration and saving time. Additionally, by means of the parking assistance solution as presented herein one may increase the chances of securing parking spots in busy parking lots.

### Definitions

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

A "parking area" has used herein refers to a designated or identifiable land parcel, structural volume, or an extended region of a thoroughfare, which is primarily allocated, configured, managed, or utilized for the parking or stationing of one or more vehicles, and typically facilitates access to and from said vehicles. In other words, the term "parking area" may be understood any site, facility, or zone, whether physically bounded or virtually delimited, that is configured, designated, permitted, or otherwise suitable for accommodating at least one parked vehicle. Such a parking area may manifest in various forms, including, but not limited to an open-air parking lot, a parking garage, a parking structure, a defined street parking zone (i.e., a designated segment or segments of a public or private roadway, curb side, median, or shoulder, where prevailing regulations, signage, or conventions permit or allocate space for the parking of multiple vehicles). Furthermore, a parking area typically comprises one or more individual parking spots (areas dimensioned for a single vehicle). A parking spot may also be referred to as a parking space or parking slot.

In the present context, a "sensor" (or "sensor device"), and in particular a "vehicle-mounted sensor", refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Cameras capture visual data, allowing the vehicle's computer system to recognize traffic signs, lane markings, pedestrians, and other vehicles. Furthermore, cameras may be configured to capture light outside the visual spectrum, such as infrared light using either dedicated thermal imaging cameras ("infrared cameras") or cameras capable of capturing light both in the visual spectrum and the infrared spectrum. Ultrasonic sensors use sound waves to measure proximity to objects. Various machine learning algorithms (such as e.g., artificial neural networks) may be employed to process the output from the sensors to make sense of the environment.

The "surrounding environment" of a vehicle can be understood as a general area around the vehicle in which objects (such as other vehicles, landmarks, obstacles, etc.) can be detected and identified by vehicle sensors (radar, LIDAR, cameras, etc.), i.e. within a sensor range of the ego-vehicle.

As used herein, a "Human-Machine Interface" ("HMI") refers to an interactive system integrated within a vehicle, typically governed by one or more processing units, designed to facilitate communication, information exchange, and control between a human occupant, such as a driver or passenger, and one or more vehicular operational systems, information systems, or comfort and entertainment features. The HMI may suitably comprise at least one electronic display device, or a plurality of such display devices, configured to render a diverse range of dynamic visual information for presentation to the occupant, wherein said visual information encompasses, without limitation, graphical user interfaces, textual data, still imagery, animations, and video content. Through such visual presentations on said display device(s), the HMI serves to convey information pertaining to vehicle status, operational parameters, navigation guidance, communication data, multimedia entertainment, diagnostic feedback, and safety-related alerts. It may be further configured to receive inputs from the occupant to manage, control, or interact with said vehicle systems and displayed content, such inputs being receivable through various modalities including, but not limited to, touch-sensitive surfaces often integrated with or overlaid upon the display device(s), voice recognition systems, physical controls such as buttons or rotary dials, gesture recognition sensors, or other input mechanisms operatively coupled to the HMI and its associated processing units for interpretation and action.

### Example Embodiments

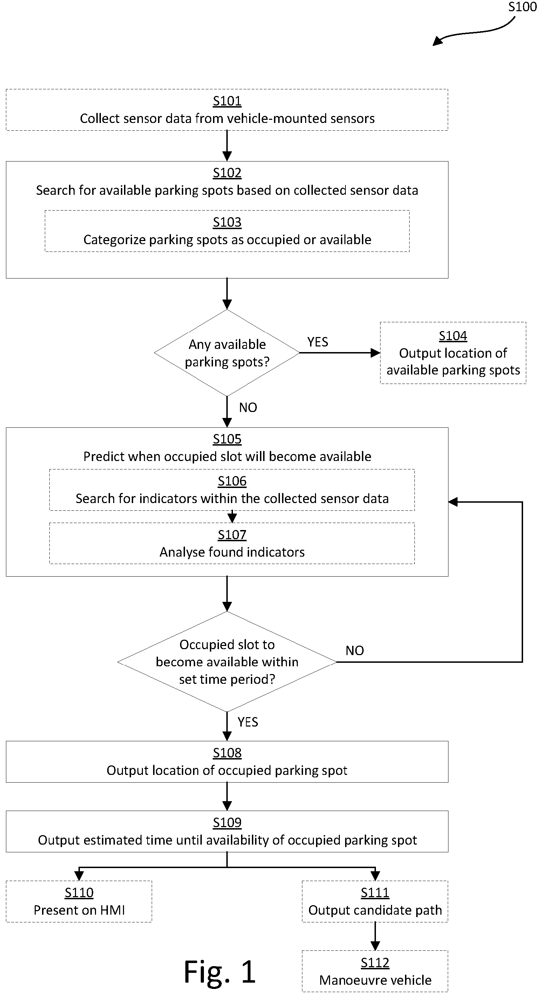

Fig. 1 is a schematic flowchart representation of a method S100 for providing parking assistance for a vehicle (or an occupant thereof) in accordance with some embodiments. The method S100 is preferably a computer-implemented method S100, performed by a processing system of an ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 may comprise collecting S101 sensor data using one or more vehicle mounted sensors while the vehicle is moving within or around the parking area. Accordingly, the vehicle's sensors may be configured to continuously monitor the surrounding environment of the vehicle, and thus immediately collect sensor data pertaining to the parking area as soon as the vehicle enters the parking area. Moreover, the collected S101 sensor data may be stored in a suitable data repository of the vehicle.

The method S100 further comprises searching S102 for available parking spots in a parking area having a plurality of parking spots based on sensor data collected by the one or more vehicle-mounted sensors. In more detail, the driver can either activate the vehicle's parking assistance system to search for available parking spots upon entering the parking area, or the system may be configured to automatically search for available parking spots upon entering or passing by a parking area at a low enough speed. In reference to the latter, the search S102 may be triggered based on e.g., the vehicle's location, map data, and the vehicle's speed. As the vehicle moves at low speed (e.g., below 20-30 km/h) through the parking area, side-facing ultrasonic sensor may continuously scan for gaps between parked vehicles or defined by parking bay markings. Moreover, cameras may simultaneously observe the environment and be used as an alternative or addition to the ultrasonic sensors to find available parking spots. Further, as the sensors detect a potential opening that meets a minimum length requirement (pre-defined in the system based on the vehicle's size plus a margin) the system may be notified of a potential available parking spot. Moreover, visual verification and classification may be utilized by analysing a camera feed of corresponding to the detected gap. Image processing algorithms may for example be used to look for visual cues like painted parking lines (to confirm it's a designated spot) and the absence of a vehicle or major obstructions within those lines.

Further, in some embodiments, the searching S102 for available parking spots may comprise categorizing S103 each parking spot of the plurality of parking spots as an occupied parking spot or an available parking spot based on the sensor data collected from the one or more vehicle-mounted sensors. Here, a parking spot may be categorized as occupied in response to determining that an obstacle (e.g., a vehicle) is present within that parking spot, and a parking spot may be categorized as available in response to determining that no obstacle is present within that parking spot. As mentioned above, additional criteria may be required to define a parking spot as available such as for example that it is legal to park in the opening (based on visual cues such as parking lines and signage), that the opening meets a minimum length requirement, and optionally a minimum depth requirement.

The method S100 further comprises predicting S105 when one or more occupied parking spots within the parking area will become available based on sensor data collected from one or more vehicle-mounted sensors. Here, the same or a different sensor dataset may be used for the prediction process S105 as compared to for the searching process S102. For example, the searching S102 for available parking spots may, in some realizations, be performed relying (only) on ultrasonic sensors whereas the prediction S105 of soon-to-become available parking spots may require, at least, camera images, and optionally also thermal camera images, RADAR output and/or LiDAR point clouds.

In some embodiments, the prediction process S105 is triggered by not finding any available parking spots in the parking area. Thus, the process of predicting S105 when one or more occupied parking spots within the parking area will become available may be performed in response to not finding any available parking spots in the parking area or a in portion thereof. However, in some embodiments, the prediction process S105 is triggered by not finding any available parking spots after a set time period has elapsed. For example, after not finding a parking spot after 1 minute since entering the parking area, the prediction process S105 may be automatically triggered. In some embodiments, the prediction process S105 may be triggered in response to detecting a user-request or user-input (e.g., via an HMI of the vehicle). Alternatively, the prediction S105 may be triggered as soon as the vehicle enters a parking area using for example the vehicle's location and map data.

Moreover, if one or more available parking spots are found during the search S102, the method S100 may comprise, in response to finding one or more available parking spots, outputting S104 a signal indicative of a location of the one or more available parking spots. In more detail, the location of the one or more available parking spots may be presented on an in-vehicle HMI. Thus, the signal indicative of a location of the one or more available parking spots may be output S104 to an in-vehicle HMI in order to present the location of the one or more available parking spots to a driver of the vehicle. Alternatively, or additionally, the signal indicative of a location of the one or more available parking spots may be output S104 to an ADS function of the vehicle in order to manoeuvre the vehicle autonomously to the available parking spot. It should be noted that the prediction process S105 may be triggered even if available parking spots are found during the search S102, for example to provide potential parking alternatives to the driver.

Furthermore, in some embodiments, the predicting S105 comprises searching S106 for one or more indicators that an occupied parking spot is about to become available within the sensor data collected from one or more vehicle-mounted sensors. In more detail, the one or more indicators may comprise one or more pedestrians approaching a vehicle located in an occupied parking spot, one or more pedestrians loading goods into the vehicle located in the occupied parking spot, one or more lights of the vehicle located in the occupied parking spot turning on, a motor of the vehicle located in the occupied parking spot turning on, and/or a heat signature of the vehicle located in the occupied parking spot as indicated by a thermal sensor (e.g., thermal imaging camera) of the one or more vehicle-mounted sensors. Then, the one or more indicators (found in the search S106) may be analysed S107 and a probability that the occupied parking spot is about to become available and the estimated time until the occupied parking spot becoming available may be calculated. Thus, if none of the indicators are found in the sensor data, the system may simply conclude that none of the occupied parking spots will become available within a relevant timeframe.

Further, in response to predicting that a parking spot out of the one or more occupied parking spots will become available within a set time period, the method S100 comprises outputting S108, S109 a signal indicative of a location of the occupied parking spot that is predicted to become available within the set time period, and an estimated time until the occupied parking spot that is predicted to become available within the set time period will become available. The "set time period" may be understood as a threshold controlling which soon-to-be-available parking spots are presented to the driver or occupant of the vehicle. For example, if the prediction S105 results in that there are three parking spots that are estimated to be available in 20 seconds, 30 seconds, and 50 seconds, respectively, and the set time period is 45 seconds, then only the first two spots (available in 20 seconds and 30 seconds) are output S108, S109. Moreover, in some cases the set time period is a dynamic threshold. For example, the set time period may be defined as a function of time since the vehicle entered the parking area such that it increases the longer it takes for the system to find a soon-to-be-available parking spot. For example, shortly after entering a parking area, a spot that may be predicted available in 40 seconds may not be presented. However, after the vehicle has been driving around for 2 minutes in the parking area without finding any parking spots, then spots that are predicted to become available in 40 seconds may then be offered. Moreover, the "estimated time" until the occupied that is predicted to become available within the set time period will become available may be a single value (e.g., 30 seconds) or a time range (e.g., 20-40 seconds).

Further, in some embodiments, the outputting S108, S109 of the signal comprises causing S110 a display device of a Human-Machine Interface (HMI) of the vehicle to display a graphical user interface that comprises a graphical representation of the location of the occupied parking spot that is predicted to become available within the set time period, and the estimated time until the occupied parking spot that is predicted to become available within the set time period will become available.

In some embodiments, the method S100 comprises outputting S111 a candidate path from the vehicle's current location to the location of the occupied parking spot that is predicted to become available within the set time period, and controlling S112 one or more actuators of the vehicle so to manoeuvre the vehicle along the candidate path to the location of the occupied parking spot that is predicted to become available within the set time period.

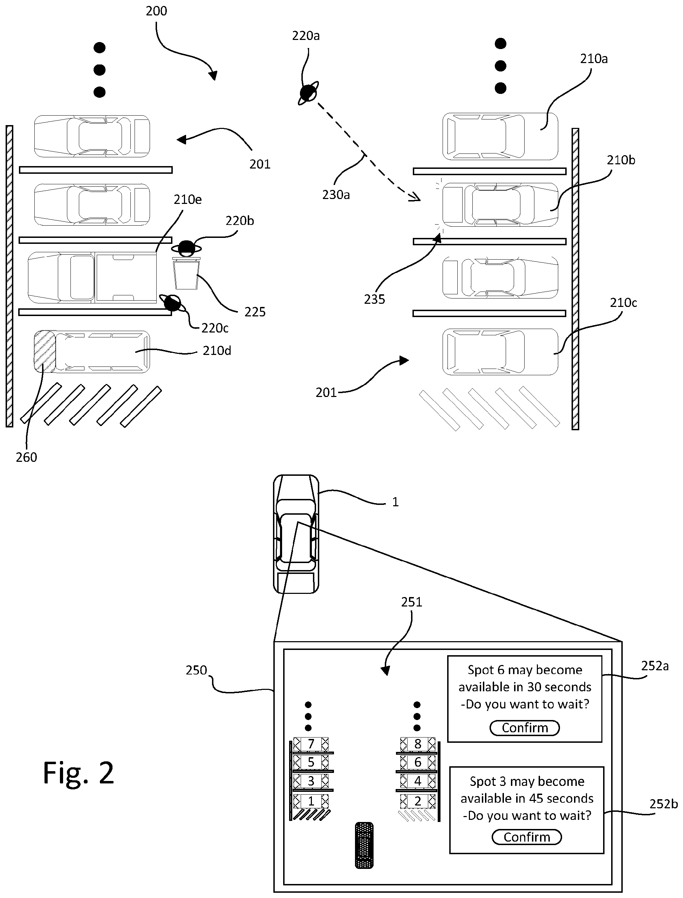

Turning now briefly to Fig. 2, which is a schematic top-view illustration of a parking area 200 having a plurality of parking spots 201 and a vehicle 1 having a system for providing parking assistance in accordance with some embodiments. Here, the vehicle 1 has scanned at least a portion of the parking area 200 using one or more sensors of the vehicle 1 and the search S102 for available parking spots concluded in that there are no available parking spots, as depicted in Fig. 2. Thus, a prediction function of the parking assistance system of the vehicle 1 was triggered in order to predict S102 when one or more of the occupied parking spots will become available.

As mentioned above, the prediction process may include searching S106 for indicators that an occupied parking spot is about to become available within the collected sensor data. One possible indicator is that there are one or more pedestrians approaching a vehicle located in an occupied parking spot, such as the pedestrian 220a approaching the vehicle 210b. Here, the prediction module of the parking assistance system may, using the collected sensor data, detect the pedestrian 220a, predict a trajectory 230a of the pedestrian and associated the pedestrian with a specific vehicle 210b of the parked vehicles 210a, 210b, 210c, 210d, 210e. The prediction module may then compute a probability of the pedestrian 220a approaching the vehicle 210b given the trajectory 230a and use this probability to calculate the pedestrians approaching indicator value.

Another possible indicator is a loading activity indicator as depicted in reference to vehicle 210e of Fig. 2. In more detail, if the system detects one or more pedestrians 220b, 220c loading goods into a vehicle 210e it may serve as an indicator that the parking spot associated with that vehicle 210e may become available soon. Here, the prediction module of the parking assistance system may, using the collected sensor data, detect pedestrians 220b, 220c and classify the poses of those pedestrians 220b, 220c. Furthermore, the prediction module may detect objects commonly associated with loading activities, such as bags, packages, and shopping carts 225 and recognize activities of those pedestrians 220b, 220c to classify actions of those pedestrians 220b, 220c. The prediction module may then compute a probability that the pedestrians 220b, 220c are loading goods into the vehicle 210e and use this probability to calculate the loading activity indicator value.

Another possible indicator is a heat signature indicator as depicted in reference to vehicle 210d of Fig. 2. In more detail, the prediction module of the parking assistance system may use the output from a thermal sensor (e.g., a thermal imaging camera) as an indicator that a vehicle 210d may be leaving its parking spot soon. In more detail, the prediction module may identify specific parts of a parked vehicle 210d, such as the hood or tires/wheels of the vehicle 210d, and if those parts are hotter the prediction module can use that heat signature to compute a heat signature indicator. In the depicted example of Fig. 2, the hood 260 of the vehicle 210d is hotter than some set value and/or hotter than the rest of the vehicle 210d, which will be indicated in a thermal image of the vehicle 210d. Additionally, while not shown in Fig. 2, the wheels/tires may also be hotter than some set value and/or the rest of the vehicle 210d. Thus, the heat signature indicator will then indicate that the vehicle 210d was recently parked and that it unlikely that that particular parking spot will become available soon.

Yet another possible indicator is a vehicle status indicator as depicted in reference to vehicle 210b of Fig. 2. In more detail, if the system detects one or more lights of a parked vehicle turning on, or if a motor of a parked vehicle turning on, it may serve as an indicator that the parking spot associated with that vehicle is about to leave the parking spot. Here, the prediction module of the parking assistance system may, using the collected sensor data, detect that one or more lights of the vehicle are turned on (as indicated by ref. 235 in Fig. 2) and/or detect that the engine of the vehicle is turned on. The lights may for example turn on due to the vehicle being started or due to the vehicle becoming unlocked. The prediction module may then compute a vehicle status indicator value based on the detected state of the vehicle's lights and/or the vehicle's engine.

The indicators, such as the indicators mentioned in the foregoing, may then be used to calculate a probability of each occupied parking spot becoming available and an estimation of when the associated parking spot will become available. Given that the calculated probability that a particular parking spot will become available is above a threshold, and optionally, that the estimated time is below a threshold, the system may then provide this information to an HMI of the vehicle. In more detail, the system may cause a display device 250 of the HMI to display a graphical user interface (GUI) 251 comprising a graphical representation of the location of the occupied parking spot that is predicted to become available and the estimated time until the occupied parking spot will become available, as for example indicated in boxes 252a and 252b of Fig. 2. Moreover, the GUI 251 may include a prompt for the driver or occupant of the vehicle to confirm that the vehicle should wait for that particular parking spot to become available.

The prediction S105 function may be implemented using one or more machine-learning models where one feeds input data (e.g., image sequences of the parking area, thermal images of parked vehicles in the parking area, recorded sounds of the parking area, etc.) to one or more machine-learning models, which then make the desired prediction regarding when one or more occupied parking spots could become available. In more detail, one can for example use an end-to-end approach or a modular approach for the machine-learning models.

In short, the end-to-end approach involves initializing and training a machine-learning model (e.g., a deep neural network) to output a prediction of when an occupied parking spot may become available directly from a defined set of input data. The input data to the machine-learning model may for example comprise image sequences from one or more vehicle-mounted cameras. The input data may further comprise images depicting heatmaps from thermal imaging cameras and/or contextual information such as time of day, location, day of the week, weather forecasts, and so forth.

To train the machine-learning model(s) in the end-to-end solution one can obtain the desired output ("ground truth") by for example monitoring a parking area and collecting actual times of departure of the vehicles in occupied parking spots. Then one can label various image sequences of those vehicles taken at random times before the times of departure with the actual times of departure. The machine learning can then be trained, using a suitable optimization algorithm or methodology, to make predictions based on unlabelled image sequences so that the output converges towards the actual times of departure.

In the modular approach, the prediction S105 function is broken down into modular components, where each component handles a specific part of the prediction S105 process. An advantage of the modular approach is that it allows for more detailed control and optimization of each part of the prediction S105 process.

On part of the modular approach is to develop a well-defined mathematical model that translates the high-level semantic descriptions into a format that can be processed by a computer. This ensures that the system can analyse the data and produce accurate and reasonable outputs. In the following, an example of how such a mathematical model could be realized is presented.

Firstly, one may quantify the indicators that an occupied parking slot may become available soon (e.g., pedestrian proximity, loading activity, etc.) into normalized values (e.g., 0 to 1 - where 0 means no indication and larger values mean a higher confidence in the indication that the occupied parking slot is to become available soon).

The following time-varying indicator functions may be used for the i:th parking spot at time t:
- *x*₁(*t*) = Pedestrian proximity indicator [0, 1].
- *x*₂(*t*) = Loading activity indicator [0, 1].
- *x*₃(*t*) = Vehicle heat signature [0, 1].
- *x*₄(*t*) = Vehicle lights/engine status [0, 1].

Furthermore, each indicator may have a time-varying weight function *wⱼ*(*t*) that represents the reliability of each indicator: ${w}_{j} \left(t\right) = {α}_{j} + {β}_{j} ⋅ {e}^{- {γ}_{j} ⋅ t}$
- *j ∈* {1,2,3,4} represents each indicator and.
- *αⱼ* is the base weight for indicator *j.*
- *βⱼ* is the weight amplitude.
- *γⱼ* is the decay rate.

Thus, the probability *Pᵢ*(*t*) that parking spot i will become available at time *t* can be expressed as: ${P}_{i} \left(t\right) = σ \left(\sum \left({w}_{j}\left(t\right)⋅{x}_{j}\left(t\right)\right) - θ \left(t\right)\right)$ where:
- $σ \left(z\right) = \frac{1}{1 + {e}^{- z}}$
- *θ*(*t*) is a time-varying threshold function such as e.g., $θ \left(t\right) = {θ}_{0} + k ⋅ sin 2 π ⋅ \frac{t}{T}$*.*
   ∘ *θ*₀ is a base threshold.
   ∘ k is an amplitude of variation.
   ∘ *T* is the period (e.g., 24 hours).

The expected time until availability *E*[*Tᵢ*] for spot i can then be expressed as: $E \left[{T}_{i}\right] = \int t ⋅ {f}_{i} \left(t\right) dt$ where *fᵢ*(*t*) is the probability density function: ${f}_{i} \left(t\right) = {P}_{i} \left(t\right) ⋅ \frac{\left(1-{P}_{i}\left(t-Δt\right)\right)}{Δ t}$*.*

Thus, with the aforementioned examples of input data (camera image sequences and thermal images) one could obtain the required parameters to calculate the probability *Pᵢ*(*t*) and the expected time until availability *E*[*Tᵢ*]*.*

In the following some example approaches of how to quantify the aforementioned indicators (*x*₁(*t*)*,x*₂(*t*)*,x*₃(*t*)*,x*₄(*t*)) will be presented.

The sensor input for the pedestrian proximity indicator (*x*₁(*t*)) may comprise camera image sequences acquired from a suitable vehicle-mounted camera (e.g., RGB camera). Additionally, one could use LiDAR point cloud data as a complementary input to enhance depth perception and spatial accuracy.

The detection pipeline for the pedestrian proximity indicator should preferably include pedestrian detection and tracking. For real-time detection one could employ trained machine-learning models that are configured to output bounding boxes around detected individuals along with confidence scores for each detection. Examples of suitable models include YOLOv5 and Faster R-CNN. Further, one may employ sequential models to predict the trajectories of detected pedestrians (e.g., a Spatial-Temporal Graph Convolutional Network, ST-GCN). Such sequential models may be fed with input features comprising historical trajectories of pedestrians, scene context embeddings, social interaction features, etc. The ST-GCN or equivalent models processes these input features to predict the coordinates of pedestrian trajectories for the next n seconds.

Lastly, for the pedestrian proximity indicator, one can employ a model to associate a detected pedestrian with a specific parked vehicle. To this end, a trained Graph Attention Network (GAT) may be used to model the relationship between the detected pedestrian and the parked vehicles. The edge weights (*wᵢⱼ*) between a pedestrian (i) and a parked vehicle (j) may be calculated using the following formula: ${w}_{ij} = σ \left(MLP\left(\left[{d}_{ij}, {θ}_{ij}, {v}_{i}, {s}_{j}\right]\right)\right)$ where
- *MLP* stands for Multi-Layer Perceptron.
- *dᵢⱼ* is the Euclidean distance between the pedestrian and the vehicle.
- *θᵢⱼ* is the approach angle of the pedestrian relative to the vehicle.
- *vᵢ* is the velocity vector of the pedestrian.
- *sⱼ* is the status features of the vehicle.

The pedestrian proximity indicator (*x*₁(*t*)) may then be computed as the maximum weighted probability of approach for all detected pedestrians, and is given by: ${x}_{1} \left(t\right) = imax \left\{{w}_{i}⋅{p}_{i}\left(t\right)\right\}$ where
- *w**ᵢ*** is the association weight with the target vehicle which is associated with spot i.
- *pᵢ*(*t*) is the probability of the pedestrian approaching the vehicle i given the predicted trajectory.

The sensor input for the loading activity indicator (*x*₂(*t*)) may comprise camera image sequences acquired from a suitable vehicle-mounted camera (e.g., RGB camera). Additionally, one could use LiDAR point cloud data as a complementary input to enhance depth perception and spatial accuracy.

Further, the detection pipeline for the loading activity indicator may include a pose estimation model for estimating human poses. Examples of such models include HRNet and OpenPose. These models, and other equivalent models, track key points on the human body (e.g., shoulders, elbows, and wrists) in order to understand the posture and movement of humans. Further, the detection pipeline may include an object detection model for detecting objects commonly associated with loading activities (e.g., bags, packages, and shopping carts). The detection pipeline may further include an activity recognition model to classify actions of the subject pedestrian. Examples of such models include Temporal Convolutional Neural Networks (CNN) or transformers. These models, and other equivalent models, analyses sequences of detected poses, interactions between the individual and detected objects, and the spatial relationship between individuals and parked vehicles to recognize specific loading activities.

The loading activity indicator (*x*₂(*t*)) may then be computed using a weighted combination of various scores: ${x}_{2} \left(t\right) = α ⋅ A \left(t\right) + β ⋅ O \left(t\right) + γ ⋅ L \left(t\right)$ where
- *A*(*t*) is the activity classification score, representing the likelihood of a loading activity based on pose sequences and pose interactions.
- *O*(*t*) is the object presence score, indicating the presence and relevance of objects such as bags, packages or shopping carts.
- *L*(*t*) is the location relevance score, which assess the spatial relationship between the detected activity and the vehicle.

The sensor input for the vehicle heat signature indicator (*x*₃(*t*)) may comprise a thermal image, which can be captured and processed by a thermal imaging camera system. The sensor input can then be fed to a CNN for heat map analysis, and an example architecture for such a CNN is presented below.

The feature extraction backbone of the CNN can utilize a model such as ResNet-18 or EfficientNet-B0 with a modified input layer for single-channel thermal images. The output from this model will be a feature map *F* ∈ *R*^{*h*×*w*×*d*}, which is a dense grid of mid-level semantics (i.e., the "what and where" of the scene).

Next a global context module is employed in the architecture, which is conceptually similar to a Squeeze- and-Excitation (SE) or CBAM-channel module. The module should be configured for global average pooling in order to collapse the spatial grid to a d-dimensional vector z. Further, a fully connected (FC) bottleneck ( $d \to \frac{d}{2} \to d$) may be employed to reduce parameters and encourage inter-channel interaction, and lastly a channel attention mechanism may be employed to let the network emphasize specific feature channels that contain salient hot/cold patterns while suppressing irrelevant ones to improve robustness to noise and background clutter.

Further, the prediction head of the CNN network can employ adaptive average pooling to pool each channel to a single scalar regardless of input size. Further, the prediction head may employ an MLP to learn non-linear combinations of channel features, which is advantageous if the input signal is subtle. Accordingly, the prediction head converts the attended global descriptor into a single scalar *x*₃(*t*) ∈ [0,1].

In other words, a CNN may identify specific parts of a parked vehicle, such as the engine compartment or the hood of the car (for petrol cars), radiators (for electric cars), or tires/wheels. These parts may be hotter if the vehicle was recently parked, which allows the CNN to derive the vehicle heat signature indicator value *x*₃(*t*) based on the duration that the vehicle has been parked.

For the vehicle status indicator *x*₄(*t*)*,* a sequential model like a transformer or other similar architectures may be utilized. The input sequence comprises multiple time steps, and each time step (*sₜ*) encompasses features such as the status of the parked vehicle's lights, the engine status, and temporal embeddings that encode the time of day. These features offer a comprehensive perspective on the vehicle's status over time.

As readily understood by the skilled person in the art, the process of calculating the vehicle status indicator *x*₄(*t*) is very similar to the process for calculating loading activity indicator *x*₂(*t*)*.* Thus, the details thereof are omitted for the sake of brevity and conciseness.

Executable instructions for performing these functions are, optionally, included in a non-transitory computer-readable storage medium or other computer program product configured for execution by one or more processors.

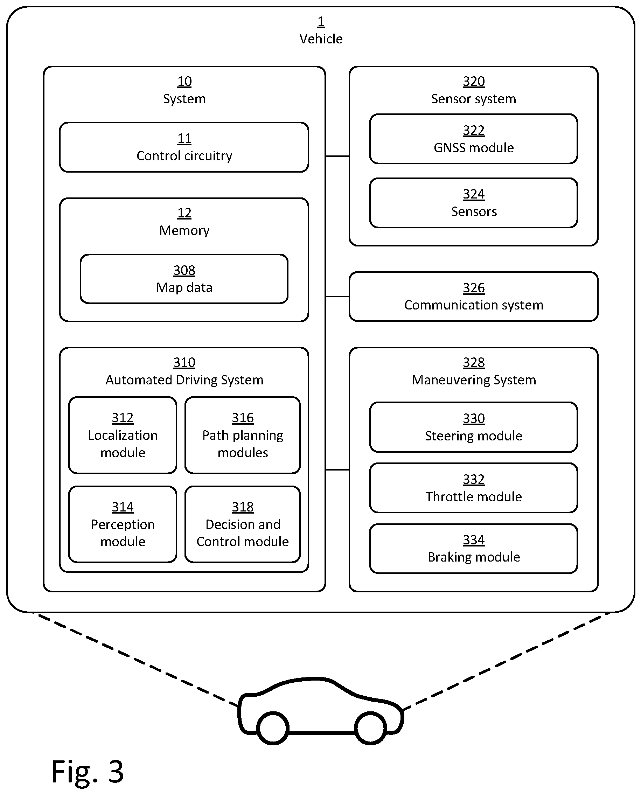

Fig. 3 is a schematic illustration of an ADS-equipped vehicle 1 comprising a system 10 for providing parking assistance in accordance with some embodiments. As used herein, a "vehicle" is any form of motorized transport. For example, the vehicle 1 may be any suitable road vehicle such as a car (as illustrated herein), a (cargo) truck, a bus, etc.

The system 10 comprises control circuitry (e.g. one or more processors) configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. The control circuitry 11 may physically comprise one single circuitry device. Alternatively, the control circuitry 11 may be distributed over several circuitry devices. As an example, the system 10 may share its control circuitry 11 with other parts of the vehicle 1 (e.g. the ADS 310).

Moreover, the system 10 may form a part of the ADS 310, i.e. the system 10 may be implemented as a module or feature of the ADS. The control circuitry 11 may comprise one or more processors, such as a central processing unit (CPU), a graphics processing unit (GPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

Accordingly, the one or more memory storage areas 12 and the program code are configured to, with the one or more processors 11, cause the system to search for available parking spots in a parking area 200 having a plurality of parking spots 201 based on sensor data collected from one or more vehicle-mounted sensors 324. Furthermore, the system is caused to predict when one or more occupied parking spots within the parking area 200 will become available based on sensor data collected by one or more vehicle-mounted sensors 324. Then, in in response to predicting that a parking spot out of the one or more occupied parking spots will become available within a set time period, the system is caused to output a signal indicative of a location of the occupied parking spot that is predicted to become available within the set time period, and an estimated time until the occupied parking spot that is predicted to become available within the set time period will become available.

Moreover, the one or more memory storage areas 12 and the program code may be configured to, with the one or more processors 11, cause the system 10 to collect (and at least temporarily store) sensor data using the one or more vehicle mounted sensors 324 while the vehicle 1 is moving within or around the parking area. Further, the system 10 may be caused to categorize each parking spot of the plurality of parking spots 201 as an occupied parking spot or an available parking spot based on the sensor data collected from the one or more vehicle-mounted sensors 324.

In the illustrated example, the memory 12 further stores map data 308. The map data 308 may for instance be used by the ADS 310 of the vehicle 1 in order to perform autonomous functions of the vehicle 1. The map data 308 may further be used to provide the parking assistance system with structural information about parking areas. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining, searching, predicting, outputting, collecting, categorizing, analysing, and controlling steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for providing parking assistance for a vehicle, the computer-implemented method comprising:
searching (S102) for available parking spots in a parking area having a plurality of parking spots based on sensor data collected from one or more vehicle-mounted sensors;
predicting (S105) when one or more occupied parking spots within the parking area will become available based on sensor data collected from one or more vehicle-mounted sensors;
in response to predicting that a parking spot out of the one or more occupied parking spots will become available within a set time period, outputting (S108, S109) a signal indicative of:
a location of the occupied parking spot that is predicted to become available within the set time period, and
an estimated time until the occupied parking spot that is predicted to become available within the set time period will become available.

2. The computer-implemented method (S100) according to claim 1, further comprising:
collecting (S101) sensor data using the one or more vehicle mounted sensors while the vehicle is moving within or around the parking area.

3. The computer-implemented method (S100) according to claim 1 or 2, wherein searching for available parking spots comprises:
categorizing each parking spot of the plurality of parking spots as an occupied parking spot or an available parking spot based on the sensor data collected from the one or more vehicle-mounted sensors;
wherein a parking spot is categorized as occupied in response to determining that an obstacle is present within that parking spot; and
wherein a parking spot is categorized as available in response to determining that no obstacle is present within that parking spot.

4. The computer-implemented method (S100) according to any one of claims 1-3, wherein the predicting when one or more occupied parking spots within the parking area will become available is performed in response to not finding any available parking spots in the parking area.

5. The computer-implemented method (S100) according to any one of claims 1-4, wherein the predicting (S105) when one or more occupied parking spots within the parking area will become available comprises:
searching (S106) for one or more indicator that an occupied parking spot is about to become available within the sensor data collected from one or more vehicle-mounted sensors;
wherein the one or more indicators comprises:
one or more pedestrians approaching a vehicle located in an occupied parking spot,
one or more pedestrians loading goods into the vehicle located in the occupied parking spot,
one or more lights of the vehicle located in the occupied parking spot turning on,
a motor of the vehicle located in the occupied parking spot turning on, and/or
a heat signature of the vehicle located in the occupied parking spot as indicated by a thermal sensor of the one or more vehicle-mounted sensors;
analysing the one or more indicators and calculating a probability that the occupied parking spot is about to become available and the estimated time until the occupied parking spot becoming available.

6. The computer-implemented method (S100) according to any one of claims 1-5, wherein the outputting (S108, S109) of the signal comprises:
causing (S110) a display device of a Human-Machine Interface, HMI, of the vehicle to display:
a graphical user interface comprising a graphical representation of:
the location of the occupied parking spot that is predicted to become available within the set time period, and
the estimated time until the occupied parking spot that is predicted to become available within the set time period will become available.

7. The computer-implemented method (S100) according to any one of claims 1-6, further comprising:
outputting (S111) a candidate path from the vehicle's current location to the location of the occupied parking spot that is predicted to become available within the set time period;
controlling (S112) one or more actuators of the vehicle so to manoeuvre the vehicle along the candidate path to the location of the occupied parking spot that is predicted to become available within the set time period.

8. A computer program product comprising instructions which, when the program is executed by a computing device of a vehicle, causes the computing device to carry out the method (S100) according to any one of claims 1-7.

9. A computer-readable storage medium comprising instructions which, when executed by a computing device of a vehicle, causes the computing device to carry out the method (S100) according to any one of claims 1-7.

10. A system (10) for providing parking assistance for a vehicle (1), the system comprising one or more processors (11) and one or more memory storage areas (12) comprising program code, the one or more memory storage areas and the program code being configured to, with the one or more processors, cause the system (10) to at least:
search for available parking spots in a parking area (200) having a plurality of parking spots (201) based on sensor data collected from one or more vehicle-mounted sensors (324);
predict when one or more occupied parking spots within the parking area (200) will become available based on sensor data collected by one or more vehicle-mounted sensors (324);
in response to predicting that a parking spot out of the one or more occupied parking spots will become available within a set time period, output a signal indicative of:
a location of the occupied parking spot that is predicted to become available within the set time period, and
an estimated time until the occupied parking spot that is predicted to become available within the set time period will become available.

11. The system (10) according to claim 10, wherein the one or more memory storage areas (12) and the program code are configured to, with the one or more processors (11), cause the system (10) to:
collect sensor data using the one or more vehicle mounted sensors (324) while the vehicle (1) is moving within or around the parking area (200).

12. The system (10) according to claim 10 or 11, wherein searching for available parking spots comprises:
categorize each parking spot of the plurality of parking spots (201) as an occupied parking spot or an available parking spot based on the sensor data collected from the one or more vehicle-mounted sensors;
wherein a parking spot is categorized as occupied in response to determining that an obstacle is present within that parking spot; and
wherein a parking spot is categorized as available in response to determining that no obstacle is present within that parking spot.

13. The system (10) according to any one of claims 10-12, wherein the predicting when one or more occupied parking spots within the parking area (200) will become available is performed in response to not finding any available parking spots in the parking area (200).

14. The system (10) according to any one of claims 10-13, wherein the predicting when one or more occupied parking spots within the parking area (200) will become available comprises:
search for one or more indicator that an occupied parking spot is about to become available within the sensor data collected from one or more vehicle-mounted sensors;
wherein the one or more indicators comprises:
one or more pedestrians (220a, 220b, 220c) approaching a vehicle (210a, 210b, 210c, 210d, 210e) located in an occupied parking spot,
one or more pedestrians (220a, 220b, 220c) loading goods into the vehicle located in the occupied parking spot,
one or more lights of the vehicle (210a, 210b, 210c, 210d, 210e) located in the occupied parking spot turning on,
a motor of the vehicle (210a, 210b, 210c, 210d, 210e) located in the occupied parking spot turning on, and/or
a heat signature of the vehicle (210a, 210b, 210c, 210d, 210e) located in the occupied parking spot as indicated by a thermal sensor of the one or more vehicle-mounted sensors;
analyse the one or more indicators and calculating a probability that the occupied parking spot is about to become available and the estimated time until the occupied parking spot becoming available.

15. A vehicle (1) comprising a system (10) according to any one of claims 10-14.
